(19) **Europäisches Patentamt**
**European Patent Office**
**Office européen des brevets**

(11) **EP 2 272 237 B1**

(12) **EUROPEAN PATENT SPECIFICATION**

(45) Date of publication and mention
of the grant of the patent:
**04.01.2012 Bulletin 2012/01**

(51) Int Cl.:
***H04L 29/06*** (2006.01)   ***H04N 7/14*** (2006.01)

(21) Application number: **09719364.3**

(22) Date of filing: **12.03.2009**

(86) International application number:
**PCT/EP2009/052916**

(87) International publication number:
**WO 2009/112547 (17.09.2009 Gazette 2009/38)**

(54) **METHOD OF TRANSMITTING DATA IN A COMMUNICATION SYSTEM**

VERFAHREN ZUR ÜBERTRAGUNG VON DATEN IN EINEM KOMMUNIKATIONSSYSTEM

PROCÉDÉ DE TRANSMISSION DE DONNÉES DANS UN SYSTÈME DE COMMUNICATION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **12.03.2008 PCT/IB2008/001353**
**22.10.2008 GB 0819389**

(43) Date of publication of application:
**12.01.2011 Bulletin 2011/02**

(73) Proprietor: **Skype Limited**
**Dublin 2 (IE)**

(72) Inventor: **JEFREMOV, Andrei**
**17762 Jarfalla (SE)**

(74) Representative: **Driver, Virginia Rozanne**
**Page White & Farrer**
**Bedford House**
**John Street**
**London WC1N 2BF (GB)**

(56) References cited:
**EP-A- 1 463 323      WO-A-2008/027724**
**US-A1- 2005 018 768   US-A1- 2007 174 881**

**Description**

Field of the Invention

The present invention relates to a method and system for transmitting and receiving data in a communication system. More particularly, the present invention relates to a method and apparatus for transmitting and receiving image data to be output to a user on a display.

Background of the Invention

In a communication system a communication network is provided, which can link together at least two communication terminals so that the terminals can send information to each other in a call or other communication event. Information may include speech, text, images or video.

Digital communication systems are based on the transmission of digital signals. Analogue signals such as light waves are input into a recording device such as a camera and recorded by an image sensor such as a charged coupled device (CCD) in the camera. Data recorded by the image sensor is then converted into digital data by an analogue to digital converter. The digital signal is then encoded and placed into data packets for transmission over a communication network.

Each data packet includes a header portion and a payload portion. The header portion of the data packet contains data for transmitting and processing the data packet. This information may include an identification number and source address that uniquely identifies the packet, a header checksum used to detect processing errors and the destination address. The payload portion of the data packet includes the encoded video data intended for transmission.

EP1463323 discloses adapting media content for transmission between a first communication device and a second communication device.

The transmission of high quality images, such as those with a high resolution, may require large amounts of data to be encoded and transmitted via the communication network, particularly during real time communication events such as video calls and video streaming. This consumes a large amount of CPU (Central Processing Unit) resource of the transmitting terminal and of the receiving terminal which in turn increases the power consumption of the terminals. The transmission of large amounts of data will also consume the bandwidth of network, thereby increasing introducing packet loss and delay.

The transmission of high quality images may require complex compression methods to encode the data, such encoding methods may again consume a large amount of CPU resource.

A further problem with transmitting high quality images is that this can overload the CPU resources of the terminals thereby adversely affecting the operation of the terminal to display the image and perform other processing functions.

The burden on the CPU resources of the terminals may be alleviated by sending data at a low resolution. However this can also adversely affect the quality of the displayed image. This is particularly noticeable to a user when the display screen on which the image is displayed is large and has a high resolution.

It is therefore an aim of the present invention to overcome the above identified problems by efficiently encoding and transmitting information over the network without affecting the perceived quality of the image displayed at the receiving terminal.

It is a further aim of the invention to improve the perceived quality of the image data when it is displayed at a receiving terminal.

Summary of the invention

According to a first aspect of the present invention there is provided a method of transmitting image data from a first node to a second node during a communication event, wherein the second node comprises a display for displaying image data at the second node, said method comprising;

receiving at the first node, information indicating at least one display characteristic with which image data received at the second node will be displayed on said display;

inputting image data at the first node;

determining a processing step to be applied to the inputted image data to generate adapted image data, such that at least one characteristic of the adapted image data is optimised for said at least one display characteristic;

applying the processing step to generate the adapted image data; and

transmitting the adapted image data to the second terminal.

According to a second aspect of the present invention there is provided a method of transmitting image data from a first node to a second node during a communication event, wherein the second node comprises a display for displaying image data at the second node, said method comprising;

receiving at the first node, information indicating at least one display characteristic with which image data received at the second node will be displayed on said display; inputting image data at the first node;

determining a processing step to be applied to the inputted image data to generate adapted image data, such that an acceptable quality threshold is met when the adapted image data is displayed with the display characteristic;

applying the processing step to generate the adapted image data; and

transmitting the adapted image data to the second terminal.

According to a third aspect of the invention there is provided a transmitting terminal arranged to transmit image data to a receiving terminal during a communication event, wherein the receiving terminal comprises a display for displaying image data, said transmitting terminal comprising:

a receiver for receiving information indicating at least one display characteristic with which image data received at the receiving terminal will be displayed on said display;

an image inputting system for inputting image data at the transmitting terminal; a control block for determining a processing step to be applied to the inputted image data to generate adapted image data, such that at least one characteristic of the adapted image data is optimised for said at least one display characteristic;

a processing block for applying the processing step to generate the adapted image data; and

a transmitter for transmitting the adapted image data to the second terminal.

According to a fourth aspect of the present invention there is provided a receiving terminal for receiving image data transmitted from a transmitting terminal during a communication event, said receiving terminal comprising:

a display for displaying image data received by the receiving terminal, a display reporter unit arranged to determine information indicating a display characteristic with which image data received at the second node will be displayed on said display; and

a transmitter for transmitting said information indicating said display characteristic to the transmitting terminal, such that the transmitting terminal may adapt the image data to be transmitted to the receiving terminal in order to optimise at least one characteristic of the image for said at least one display characteristic.

One advantage of embodiments of the present invention is that the resolution of the image may be adapted to increase only when this is necessary to maintain an acceptable level of quality of the displayed image.

Furthermore the data in the encoded image may be optimised according to the manner in which it is displayed at the receiving terminal.

Brief Description of Drawings

For a better understanding of the present invention and to show how the same may be carried into effect, embodiments of the present invention will now be described with reference to the following drawings:

Figure 1 shows a communication network;

Figure 2 shows a first user terminal and a second user terminal in more detail;

Figure 3 shows transmitting circuitry of a user terminal in accordance with an embodiment of the invention;

Figure 4 shows receiving circuitry of a user terminal in accordance with an embodiment of the invention;

Figure 5 shows a flowchart according to an embodiment of the invention;

Figure 6 shows a display screen having dimensions h x w;

Figure 7 shows a flowchart according to a further embodiment of the invention;

Figure 8 shows a flowchart according to a further embodiment of the invention;

Figure 9 is a diagram showing the aspect ratio of an image display area;

Figure 10 is a diagram showing the aspect ratio of an image;

Figure 11 is a diagram showing the aspect ratio of an encoded image.

Figure 12 is a diagram showing transmitting circuitry according to a further embodiment of the invention; and

Figure 13 shows a flowchart according to a further embodiment of the invention.

Detailed Description of the Invention

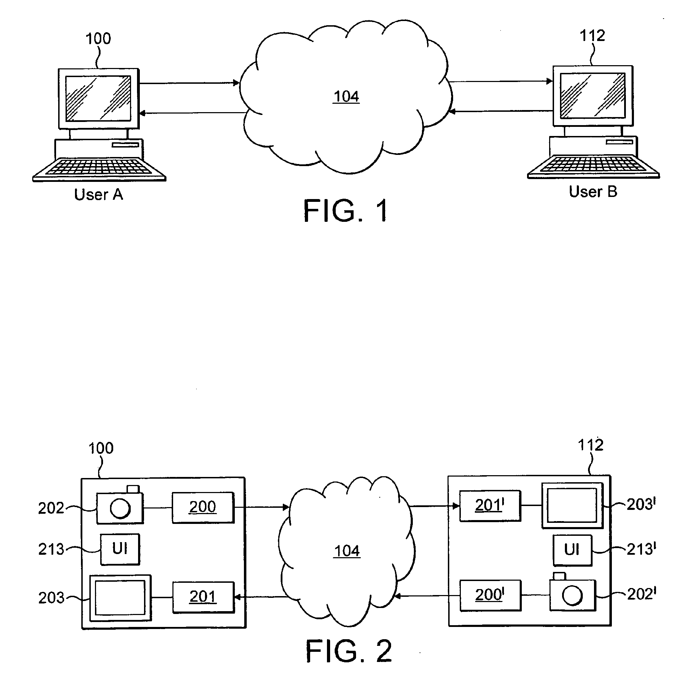

Figure 1 shows a first node 100 and a second node 112 connected to a communication network 104. In the described embodiment, the first node 100 is a first user terminal operated by User A, and the second node 112 is a second user terminal 112 is operated by User B. In an alternative embodiment the first node 100 may be a server arranged to provide media content to the user terminal 112. In one embodiment of the invention the communication network 104 is the internet.

The user terminals 100, 112, may be a personal computer, a gaming device, a personal digital assistant, a suitably enabled mobile phone, a television, or another device able to output image data on an integrated or peripheral display. The terminals may be connected to the network via a wired or wireless connection that employs a particular access technology such as Ethernet, WiFi, WiMax (Worldwide Interoperability for Microwave Access), or 3G (third generation).

A communication event, such as a video call, may be set up between the first user terminal 100 and the second user terminal 112. During the video call, video data is transmitted between the user terminals via the communication network 104.

Reference will now be made to Figure 2. Figure 2 shows the first user terminal 100 and the second user terminal in more detail. The first user terminal 100 comprises: an image input system 202 for capturing image data; transmitting circuitry 200 for transmitting the image data via the network 104; receiving circuitry 201 for receiving image data from the network 104; a display screen 203 for displaying the image data and a user interface (UI) device 213 for receiving an input from User A. Similarly the second user terminal contains transmitting circuitry 200', receiving circuitry 201', an image input system 202', a display screen 203' and a UI device 213'.

The following description will describe the transmission of image data from the first user terminal 100 to the second user terminal 112. However it should be readily appreciated that the second user terminal may also be arranged to transmit image data to the first user terminal in accordance with the method described below.

The transmitting circuitry of first user terminal 100 is arranged to receive image data from the image input system 202 and to transmit the image data to the second user terminal 112.

In a preferred embodiment of the invention the image input system 202, 202' is a video camera. Video data is transmitted from the first user terminal 100 to the second user terminal 112, via the network 104. The receiving circuitry 201' of the second user terminal 112 is arranged to receive the video data from the network 104 and to output the video data on the display screen 203.'

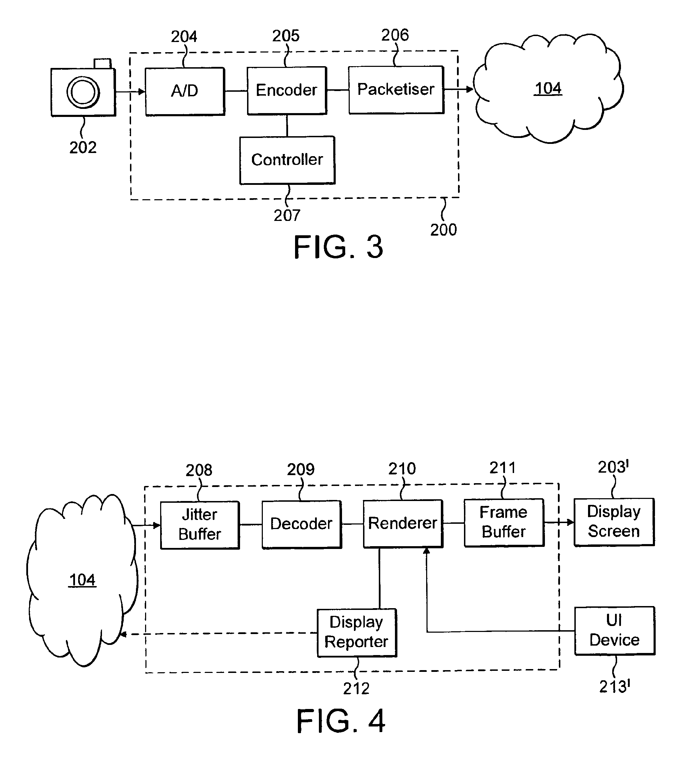

Figure 3 shows the transmitting circuitry 200, 200' in more detail. The transmitting circuitry comprises an analogue to digital converter 204, an encoder 205, a packetiser 206 and a control block 207.

Figure 4 shows the receiving circuitry 201, 201' in more detail. The receiving circuitry comprises a jitter buffer 208, a decoder 209, a renderer 210, a display reporter unit 212 and a frame buffer 211.

The analogue to digital converter 204 in the first user terminal 100, receives an analogue representation of an image captured by an image sensor of the video camera 202. The analogue to digital converter 204 is arranged to convert the image into a digital signal. The digital signal is then encoded by the encoder 205 under the control of the control block 207. The operation of the control block will be described in detail herein after.

The packetiser 206 receives the encoded video data from the encoder 205. and places the encoded video data into data packets. The data packets are then transmitted to the second terminal 112 via the network 104.

Data packets received at the second terminal 112 via the communication network are input into the jitter buffer 208. The jitter buffer 208 buffers data packets received from the network 104 and outputs the buffered data packets to the decoder 209. The decoder 209 is arranged to decode the encoded video data and to provide the decoded data to the renderer 210. The renderer is arranged to write information to the frame buffer 211. Video data written into the frame buffer is displayed on the display screen 203.

The inventors of the present invention have found that information relating to the how the image is displayed at the receiving terminal may advantageously be used at the transmitting terminal to control how the image is encoded.

For example, information relating to how the image is displayed may be used to optimise an encoding parameter used to encode the image such that an acceptable level of perceived quality for the image displayed is achieved.

For example the resolution at which the image is encoded may be controlled to be equivalent to the resolution at which the image is displayed at the receiving terminal.

According to exemplary embodiments of the invention, information relating to the manner in which the image data is displayed at the second user terminal 112 is reported by the display reporter unit 212 to the first user terminal 100. The control block 207 at the first user terminal may then control the encoder to adapt the image sent to the second terminal in dependence on the reported manner in which the image data is displayed.

Embodiments described hereinafter refer in general to adapting the resolution of the image sent to the second terminal in dependence on the display information. However it should be appreciated that in further embodiments of the invention the control block may be arranged to adapt, for example, the resolution, the bit rate, the frame rate or the compression complexity of the image data transmitted to the second terminal.

According to one embodiment of the invention, the display reporter unit 212 may be arranged to report the resolution of the display screen 203' of the second terminal 112, to the first terminal 100. In response, the control block of the first terminal may determine the resolution at which the image should be encoded. The controller may determine that if the resolution is above a predetermined threshold the image should be encoded at a high resolution, whereas if the resolution is below a predetermined threshold the image should be encoded at a low resolution.

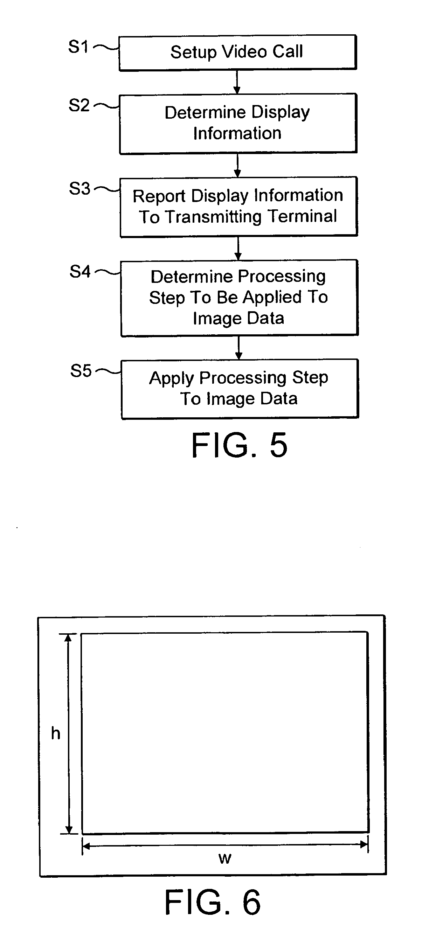

According to a further embodiment of the invention image data may be adapted according to the size of the area in which the image is displayed. This will be exemplified with reference to the flowchart shown in Figure 5.

In step S1 a communication event such as a video call is set up between the first user terminal and the second user terminal.

In step S2 the display reporter unit 212 in the second terminal is arranged to determine information relating to the manner in which data received from the first user terminal will be displayed, hereinafter referred to as 'display information'. For example the display reporter unit 212 may determine information relating to the dimensions of the display screen 203. In this case the display reporter unit 212 in the second user terminal may be arranged to report the physical height h and the width w of the display screen, as shown in Figure 6. In a preferred embodiment the display reporter unit 212 is also arranged to determine the resolution of the display screen. The dimensions and resolution of the display screen may be retrieved from a local memory of the second user terminal.

In step S3 the display information is reported from the display reporter unit 212 of the second user terminal, to the first terminal. The display information transmitted from the second terminal may be sent together with video data that is transmitted to the first user terminal from the second user terminal.

In step S4 the display information provided from the second user terminal is provided to the control block 207 of the first user terminal. The control block is arranged to determine the resolution that is appropriate for the manner in which the image data is displayed.

The resolution may be determined using an algorithm that computes the required resolution as a function of the display information.

For example the required resolution of the transmitted image may be calculated according to Equation (1)

$$\text{image resolution} = K(h, w) \times \text{screen resolution} \tag{1}$$

Where the image resolution is the total number of pixels in the image; where the screen resolution is the total number of pixels in the screen and where K is a value between 0 and 1, such that the resolution of the transmitted image does not exceed the resolution of the display. The value of K may approach 1 for larger values of screen height (h) and width (w). K may be derived empirically based on perception quality evaluation testing.

Alternatively the required resolution may be determined by a look up table stored in a memory accessible to the control block. The look up table will define an acceptable transmitted image resolution for a given display resolution and area.

In step S5 the control block is arranged to control the encoder to encode the data at the required resolution. This may be achieved, for example by reducing the frame rate or increasing the bit rate available to the encoder. The maximum resolution that may be applied to the image may be limited to the resolution of the image provided from the video camera.

In an alternative embodiment of the invention the image data may be displayed in a portion of the display screen 203, in a graphical display window, wherein the dimensions of the graphical display window may be controlled by the user of the second user terminal.

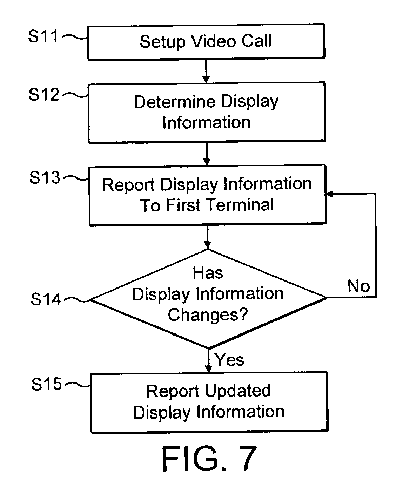

As shown in Figure 4, the renderer block receives an input from the user interface (UI) device 213 of the second terminal to control the size of the window in which the image data is displayed. The UI device of the second terminal may be a keyboard, mouse, touch screen or any other interface means suitable for controlling the dimensions of the display window. This embodiment of the invention is described with reference to the flow chart shown in Figure 7.

In step S11 a communication event such as a video call is set up between the first terminal and the second terminal.

In step S12 the display reporter unit is arranged to determine the size of the window. This may be determined for example from the renderer 210 or reported from a module used to generate the graphical window (not shown).

In step S13 the display reporter unit is arranged to report the display information to the first user terminal.

In step S14 the reporting module is arranged to monitor the renderer to determine whether the size of the display window has changed since the size of the display window was reported to the first terminal in step S13.

In step S15, if it is determined that the display window has changed size, the reporting module is arranged to transmit updated dimensions of the display window to the first user terminal 100 such that the encoder may be controlled to adapt the resolution at which the image data is encoded.

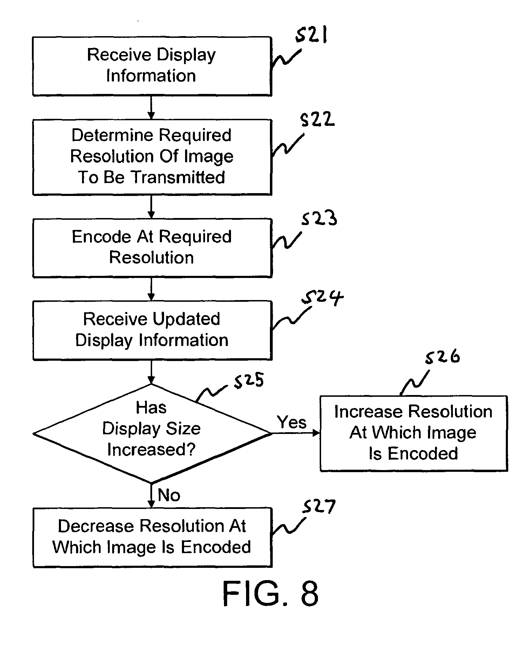

Figure 8 shows a flowchart describing the method steps implemented in the receiver in response to receiving display information transmitted according the method described in relation to Figure 7.

In step S21 the first user terminal receives display information relating to the dimensions of the window in which the image data is to be displayed.

In step S22 the control block is arranged to determine the required resolution of the image to be transmitted, such that an acceptable quality threshold is met when the image is displayed in a window with the reported window dimensions. The required resolution may be determined according to an algorithm or look up table.

In step S23 the control block is arranged to control the encoder to encode the data at the required resolution.

In step S24 the control block receives updated display window dimensions from the second user terminal 112.

In step S25 the control block is arranged to determine if the area of the display window has increased or decreased.

In step S26 if it is determined that the area of the display window has increased, the control block is arranged to control the encoder to increase the resolution at which the image data is encoded.

In step S27, if it is determined that the area of the display window has decreased, the control block is arranged to control the encoder to decrease the resolution at which the image data is encoded.

In one embodiment of the invention, User B of the second terminal may control the proportion of the image displayed in the display window such that User B may zoom in and out of the received image data.

According to an embodiment of the invention the display reporter unit is arranged to report the proportion of the image that is displayed in the display. According to this embodiment of the invention the control block is arranged to determine the magnification applied to the image from the reported display window dimensions and the proportion of the image displayed in the display window. The required resolution is then determined using an algorithm or a look up table. For example, if it is determined that the magnification applied at the renderer to the actual size of the image transmitted is more than 1 the data is encoded with a high resolution. Conversely, if it is determined that the magnification applied to the actual size of the image is less than one the encoder is controlled to encode the image with a lower resolution.

In a further embodiment of the invention, when only a portion of the image is displayed in the graphical display window the display reporter unit 212 is arranged to provide an indication of the location of the portion of the image displayed within the complete image. For example the display reporter unit 212 may be arranged to report coordinates defining the location of the displayed portion of the image. In this case the encoder may be controlled to encode only the identified area at the higher resolution. The remaining portions of the image may be encoded at a lower bit rate or cropped before the image is transmitted, such that the total bit rate required to encode the image is not necessarily increased.

In a further embodiment of the invention the display reporter unit 212 is arranged to report information indicating the colour depth of the screen. This describes the number of bits used to represent colour for one pixel. In response to receiving the colour depth information from the second terminal, the first terminal is arranged to control the encoded image data to be optimised for the reported colour depth. For example if the reported colour depth of the display is high the image may be encoded with a high colour depth, for example wherein more bits are used to represent colour than if the reported colour depth of the screen is low.

In a further embodiment of the invention the display reporter unit 212 is arranged to report information indicating the screens ability to represent light nuances. In response to receiving this information from the second terminal, the first terminal is arranged to control the encoded image data to be optimised for the screens ability to represent light. For example if the screen is able to represent light at a high quality, the image may be encoded to preserve light nuances, wherein for example more bits are used represent levels of light than if the screen is only able to represent light nuances at a lower quality.

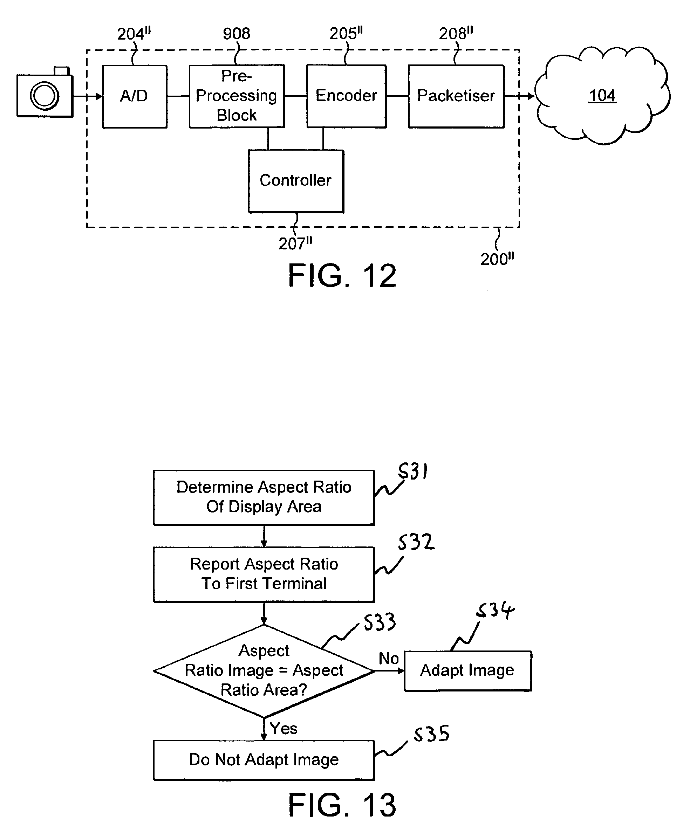

Reference is now made to Figure 12 which shows the transmitting circuitry of the user terminal according to a further embodiment of the invention. As shown in Figure 12 the transmitting circuitry 200''' further comprises an adaptation block 908 that is arranged to process the signal before it is input into the encoder.

In one embodiment of the invention the control unit may be arranged to control the adaptation block 908 in response to receiving information relating to the aspect ratio of the window in which the image is displayed at the second terminal. This will be described with reference to the flowchart shown in Figure 13.

In step S31 the display reporter unit determines the aspect ratio of the area in which the image is displayed. This may be the area of a graphical window selected by a user, or the fixed aspect ratio of the display screen.

In step S32 the display reporter unit is arranged to report the aspect ratio of the display area to the first terminal.

In step S33 the control block is arranged to compare the aspect ratio of the area in which the image will be displayed to the aspect ratio of the image received from the video camera to determine if the aspect ratios are equivalent.

In step S34 if it is determined that the aspect ratio of the image received from the camera is different from the aspect ratio of the display area, the control block is arranged to control the adaptation block 908 to add black areas to the image received from the camera such that the entire image has the same aspect ratio as the reported display area and the image provided from the camera retains its aspect ratio.

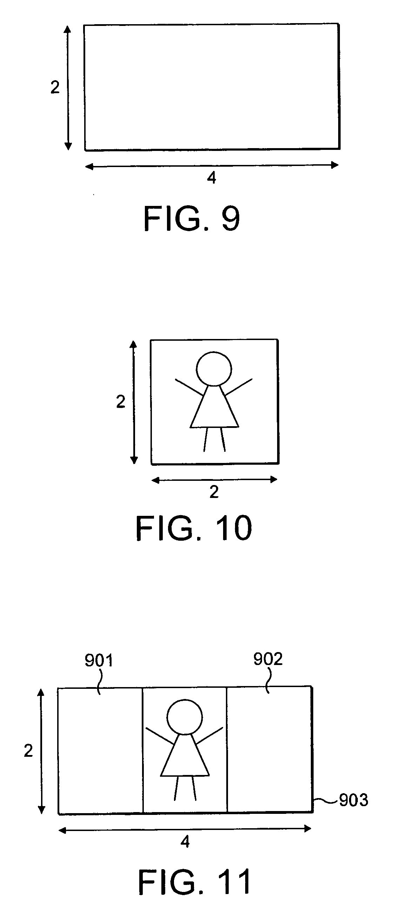

For example if the aspect ratio of the display screen is 2:4 as shown in Figure 9 and the aspect ratio of the camera image is 2:2 as shown in Figure 10 the adaptation block is arranged to add black areas 901 and 902 to the entire encoded image 903 such that the aspect ratio of the entire encoded image is 2:4.

In step S35 if it is determined that the aspect ratio of the image received from the video camera is equivalent to the aspect ratio of the display area the image is not adapted by the encoder.

In this case the image may be displayed at the second terminal with the correct aspect ratio without the need for the receiving circuitry in the second terminal to apply further image processing steps. This is particularly advantageous where the receiving circuitry in the receiving terminal is not capable of adapting the aspect ratio of the received image locally.

In an alternative embodiment of the invention the adaptation block may be arranged to adapt the image such that the image is a monochrome image in response to receiving display information indicating that the image will be displayed in monochrome.

According to a further embodiment of the invention the image input system comprises a screen sharing module. The screen sharing module is arranged to capture as image data the image displayed on display screen 203 at the first user terminal. The image data captured from the screen may then be transmitted to the second user terminal in accordance with any of the methods described above.

Display information may be reported from the second terminal explicitly, for example as an absolute value or a range. However display information may also be reported implicitly, for example the second terminal may report a device identity or software version identity from which the first terminal can derive information relating to the display 203' at the second terminal. In this case information relating to how the image data should be adapted for the display at the second terminal is pre-stored in a local memory of the first terminal.

In an alternative embodiment of the invention the adaptation block 908 may form part of the encoder.

In embodiments of the present invention the required processing may be implemented as hardware or by using appropriately adapted software executed on a processor. Software for implementing the invention may be stored on and provided by means of a carrier medium such as a carrier disc, card or tape. A possibility is to download the software via a network such as the Internet. This is an implementation preference.

While this invention has been particularly shown and described with reference to preferred embodiments, it will be understood to those skilled in the art that various changes in form and detail may be made without departing from the scope of the invention as defined in the claims.

## Claims

1. A method of transmitting image data from a first user terminal to a second user terminal during a communication event in which the first and second user terminals send communication data to each other to be output to users at the respective second and first user terminals, wherein the second user terminal comprises a display for displaying image data at the second user terminal, said method comprising;
   receiving at the first user terminal, information indicating at least one display characteristic with which image data received at the second user terminal will be displayed on said display in said communication event,, wherein the display characteristic is updated during the communication event between the first and second user terminals;
   inputting image data at the first user terminal;
   determining a processing step to be applied to the inputted image data to generate adapted image data, such that at least one characteristic of the adapted image data is optimised for said at least one display characteristic;
   applying the processing step to generate the adapted image data; and
   transmitting the adapted image data from the first user terminal to the second user terminal.

2. A method as claimed in claim 1 wherein the display characteristic comprises an indication of one of: a resolution of the display; a size of an area of the display in which at least a portion of the received image data is displayed; a colour depth of the display; a capacity to represent light nuances on the display; a screen depth of the display; an aspect ratio of an area of the display in which the received image is displayed; magnification to be applied to the received image data; or a portion of the received image data to be displayed.

3. A method as claimed in any preceding claim wherein the step of determining a processing step to be applied to the inputted image data to generate adapted image data, such that at least one characteristic of the adapted image data is optimised for said at least one display characteristic, comprises determining an encoding parameter for encoding the input image data based on the display characteristic.

4. A method as claimed in claim 3 wherein the encoding parameter relates to at least one of: a level of colour information; a level of light information; a resolution value; an aspect ratio; a frame rate; a compression complexity of the adapted image; and a bit rate.

5. A method as claimed in any preceding claim, wherein the communication event is a video call and wherein the information indicating a display characteristic is updated during the video call.

6. A method as claimed in claim 3 or 4 wherein the information indicating a display characteristic is transmitted together with video data of the video call from the second user terminal to the first user terminal

7. A method as claimed in claim 4, wherein the encoding parameter is updated in response to the receiving information indicating the updated display characteristic.

8. A method as claimed in claim 4 wherein the encoding parameter is determined according to a function of the display characteristic.

9. A method as claimed in claim 4 wherein the step of determining the encoding parameter comprises:

    querying a look up table with the display characteristic; and
    retrieving the encoding parameter at which the inputted image is to be encoded.

10. A method as claimed in any preceding claim wherein determining a processing step to be applied to the inputted image data to generate adapted image data, such that at least one characteristic of the adapted image data is optimised for said at least one display characteristic achieves an acceptable level of perceived quality for the image displayed.

11. A method as claimed in claim 4 wherein the step of applying the processing step to generate the adapted image data comprises:

    encoding the image data according to the determined encoding parameter.

12. A method as claimed in any preceding claim wherein the image data is captured from a camera.

13. A method as claimed in any preceding claim wherein the image data is screen sharing data.

14. A transmitting terminal arranged to transmit image data to a receiving terminal during a communication event in which the transmitting and receiving terminals send communication data to each other to be output to users at the respective receiving and transmitting terminals, wherein the receiving terminal comprises a display for displaying image data, said transmitting terminal comprising:

    a receiver for receiving information indicating at least one display characteristic with which image data received at the receiving terminal will be displayed on said display in said communication event, wherein the receiver is configured to receive an updated display characteristic during the communication event between the transmitting terminal and the receiving terminal;
    an image inputting system for inputting image data at the transmitting terminal;
    a control block for determining a processing step to be applied to the inputted image data to generate adapted image data, such that at least one characteristic of the adapted image data is optimised for said at least one display characteristic;
    a processing block for applying the processing step to generate the adapted image data; and
    a transmitter for transmitting the adapted image data to the receiving terminal.

15. A transmitting terminal as claimed in claim 14 wherein the transmitting terminal is one of: an end user node, a server relaying image data from an end user node, a server distributing pre-stored image data.

16. A receiving terminal for receiving image data transmitted from a transmitting terminal during a communication event in which the transmitting and receiving terminals send communication data to each other to be output to users at the respective receiving and transmitting terminals, said receiving terminal comprising:

    a display for displaying image data received by the receiving terminal, a display reporter unit arranged to determine information indicating a display characteristic with which image data received at the receiving terminal will be displayed on said display in said communication event" wherein the display reporter is configured to monitor and update the display characteristic during the communication event between the transmitting terminal and the receiving terminal; and

a transmitter for transmitting said information indicating said display characteristic to the transmitting terminal, such that the transmitting terminal may adapt the image data to be transmitted to the receiving terminal in order to optimise at least one characteristic of the image for said at least one display characteristic.

17. A computer program product comprising program code means which when executed by a computer implement the steps according to the method of any of claims 1 to 13.

**Patentansprüche**

1. Verfahren zum Senden von Bilddaten von einem ersten Nutzerterminal an ein zweites Nutzerterminal während eines Kommunikationsereignisses, in welchem das erste und das zweite Nutzerterminal einander Kommunikationsdaten zur Ausgabe an Nutzer an dem jeweiligen zweiten und ersten Nutzerterminal senden, wobei das zweite Nutzerterminal ein Display aufweist zur Anzeige von Bilddaten an dem zweiten Nutzerterminal, wobei das Verfahren umfasst;

Empfangen von Information an dem ersten Nutzerterminal, welche mindestens eine Displaycharakteristik angibt, mit welcher an dem zweiten Nutzerterminal empfangene Bilddaten auf dem Display in dem Kommunikationsereignis dargestellt werdenwerden, wobei die Displaycharakteristik während des Kommunikationsereignisses zwischen dem ersten und dem zweiten Nutzerterminal aktualisiert wird;

Eingeben von Bilddaten an dem ersten Nutzerterminal;

Bestimmen eines Verarbeitungsschritts, welcher auf die eingegebenen Bilddaten anzuwenden ist, um adaptierte Bilddaten zu erzeugen, derart, dass mindestens eine Charakteristik der adaptierten Bilddaten für die mindestens eine Displaycharakteristik optimiert ist;

Anwenden des Verarbeitungsschritts, um die adaptierten Bilddaten zu erzeugen; und

Senden der adaptierten Bilddaten von dem ersten Nutzerterminal an das zweite Nutzerterminal.

2. Verfahren nach Anspruch 1, wobei die Displaycharakteristik eine Angabe aufweist von einem aus:

einer Auflösung des Displays; einer Größe eines Bereichs des Displays, in welcher zumindest ein Teil der empfangenen Bilddaten dargestellt wird; einer Farbtiefe des Displays;

einer Fähigkeit, Helligkeitsabstufungen an dem Display wiederzugeben; einer Screen Tiefe des Displays; einem Bildseitenverhältnis eines Bereichs des Displays, in welchem das empfangene Bild dargestellt wird; auf die empfangenen Bilddaten anzuwendende Vergrößerung; oder einem Teil der empfangenen Bilddaten zur Darstellung.

3. Verfahren nach einem der vorhergehenden Ansprüche, wobei der Schritt des Bestimmens eines auf die eingegebenen Bilddaten anzuwendenden Verarbeitungsschritts, um adaptierte Bilddaten zu erzeugen, derart, dass zumindest eine Charakteristik der adaptierten Bilddaten für die zumindest eine Displaycharakteristik optimiert ist, das Bestimmen eines Kodierparameters zum Kodieren der eingegebenen Bilddaten basierend auf der Displaycharakteristik umfasst.

4. Verfahren nach Anspruch 3, wobei der Kodierparameter mindestens eines aus betrifft: ein Niveau von Farbinformation; ein Niveau von Helligkeitsinformation; einen Auflösungswert; ein Bildseitenverhältnis; eine Bildrate; eine Kompressionskomplexität des adaptierten Bildes; und eine Bitrate.

5. Verfahren nach einem der vorhergehenden Ansprüche, wobei das Kommunikationsereignis ein Videogespräch ist, und wobei die Information, welche eine Displaycharakteristik angibt, während des Videogesprächs aktualisiert wird.

6. Verfahren nach einem der Ansprüche 3 oder 4, wobei die Information, welche eine Displaycharakteristik angibt, zusammen mit Videodaten des Videogesprächs von dem zweiten Nutzerterminal an das erste Nutzerterminal übertragen wird.

7. Verfahren nach Anspruch 4, wobei der Kodierparameter als Antwort auf die empfangene Information, welche die aktualisierte Displaycharakteristik angibt, aktualisiert wird.

8. Verfahren nach Anspruch 4, wobei der Kodierparameter bestimmt wird gemäß einer Funktion der Displaycharakteristik.

9. Verfahren nach Anspruch 4, wobei der Schritt des Bestimmens des Kodierparameters umfasst:

Abfragen einer Lookup-Tabelle mit der Displaycharakteristik; und
Abrufen des Kodierparameters, bei welchem das eingegebene Bild kodiert werden soll.

10. Verfahren nach einem der vorhergehenden Ansprüche, wobei das Bestimmen eines auf die eingegebenen Bilddaten anzuwendenden Verarbeitungsschritts, um adaptierte Bilddaten zu erzeugen, derart, dass zumindest eine Charakteristik der adaptierten Bilddaten für die mindestens eine Displaycharakteristik optimiert wird, ein akzeptables Niveau wahrgenommener Qualität für das darzustellende Bild erreicht.

11. Verfahren nach Anspruch 4, wobei der Schritt des Anwendens des Verarbeitungsschritts, um die adaptierten Bilddaten zu erzeugen, aufweist:

Kodieren der Bilddaten gemäß dem bestimmten Kodierparameter.

12. Verfahren nach einem der vorhergehenden Ansprüche, wobei die Bilddaten von einer Kamera festgehalten werden.

13. Verfahren nach einem der vorhergehenden Ansprüche, wobei die Bilddaten Screensharing-Daten sind.

14. Sendeterminal, welches eingerichtet ist, Bilddaten zu einem Empfangsterminal während eines Kommunikationsereignisses zu übertragen, in welchem das Sende- und Empfangsterminal Kommunikationsdaten zur Ausgabe an Nutzer an dem jeweiligen Empfangs- und Sendeterminal aneinander senden, wobei das Empfangsterminal ein Display zur Anzeige von Bilddaten aufweist, wobei das Sendeterminal umfasst:

einen Empfänger zum Empfangen von Information, welche zumindest eine Displaycharakteristik angibt, mit welcher an dem Empfangsterminal empfangene Bilddaten an dem Display in dem Kommunikationsereignis dargestellt werdenwerden, wobei der Empfänger konfiguriert ist, eine aktualisierte Displaycharakteristik während des Kommunikationsereignisses zwischen dem Sendeterminal und dem Empfangsterminal zu empfangen; und ein Bildeingabesystem zur Eingabe von Bilddaten an dem Sendeterminal;
einen Kontrollblock zum Bestimmen eines auf die eingegebenen Bilddaten anzuwendenden Verarbeitungsschritts, um adaptierte Bilddaten zu erzeugen, derart, dass zumindest eine Charakteristik der adaptierten Bilddaten für die mindestens eine Displaycharakteristik optimiert ist;
ein Verarbeitungsblock zum Anwenden des Verarbeitungsschritts, um die adaptierten Bilddaten zu erzeugen; und
ein Sender zum Senden der adaptierten Bilddaten an das Empfangsterminal.

15. Sendeterminal nach Anspruch 14, wobei das Sendeterminal eines ist aus: einem Endbenutzerknoten, einem Server, welcher Bilddaten von einem Endbenutzerknoten weitergibt, einem Server, welcher vorab gespeicherte Bilddaten verteilt.

16. Empfangsterminal zum Empfang von Bilddaten, welche von einem Sendeterminal während eines Kommunikationsereignisses, in welchem das Sende- und das Empfangsterminal Kommunikationsdaten zur Ausgabe an Nutzer an dem jeweiligen Empfangs- und Sendeterminal aneinander senden, gesendet werden, wobei das Empfangsterminal aufweist:

ein Display zum Darstellen von Bilddaten, welche von dem Empfangsterminal empfangen werden,
eine Display-Reportereinheit, welche eingerichtet ist, um Information zu bestimmen, welche eine Displaycharakteristik angibt, mit welcher an dem Empfangsterminal empfangeneBilddaten an dem Display in dem Kommunikationsereignis dargestellt werdenwerden, wobei der Display-Reporter konfiguriert ist, die Displaycharakteristik während des Kommunikationsereignis zwischen dem Sendeterminal und dem Empfangsterminal zu überwachen und zu aktualisieren; und
ein Sender zum Senden der Information, welche die Displaycharakteristik angibt, an das Sendeterminal, derart, dass das Sendeterminal die an das Empfangsterminal zu sendenden Bilddaten adaptieren kann, um zumindest eine Charakteristik des Bildes für die zumindest eine Displaycharakteristik zu optimieren.

17. Computerprogrammprodukt, aufweisend Programmcodemittel, welche, bei Ausführung durch einen Computer, die Schritte gemäß des Verfahrens nach einem der Ansprüche 1 bis 13 implementieren.

**Revendications**

1. Procédé de transmission de données d'image à partir d'un premier terminal utilisateur vers un second terminal utilisateur au cours d'un événement de communication dans lequel les premier et second terminaux utilisateurs s'envoient des données de communication de l'un à l'autre à délivrer en sortie à des utilisateurs au niveau des second et premier terminaux utilisateurs respectifs, dans lequel le second terminal utilisateur comprend un affichage destiné à afficher des données d'image au niveau du second terminal utilisateur, ledit procédé comprenant les étapes consistant à ;

   recevoir au niveau du premier terminal utilisateur, des informations qui indiquent au moins une caractéristique d'affichage avec laquelle les données d'image reçues au niveau du second terminal utilisateur seront affichées sur ledit affichage dans ledit événement de communication, dans lequel la caractéristique d'affichage est mise à jour au cours de l'événement de communication entre les premier et second terminaux utilisateurs ;

   entrer des données d'image au niveau du premier terminal utilisateur ; déterminer une étape de traitement à appliquer aux données d'image entrées de façon à générer des données d'image adaptées, de telle sorte qu'au moins une caractéristique des données d'image adaptées soit optimisée pour ladite ou lesdites caractéristiques d'affichage ;

   appliquer l'étape de traitement de façon à générer les données d'image adaptées ; et

   émettre les données d'image adaptées à partir du premier terminal utilisateur vers le second terminal utilisateur.

2. Procédé selon la revendication 1, dans lequel la caractéristique d'affichage comprend une indication de l'un des éléments suivants : une résolution de l'affichage ; une taille d'une zone de l'affichage dans laquelle une partie au moins des données d'image reçues est affichée ; une profondeur de couleur de l'affichage ; une capacité à représenter des nuances de lumière sur l'affichage ;

   une profondeur d'écran de l'affichage ; un rapport hauteur / largeur d'une zone de l'affichage dans laquelle l'image reçue est affichée ; un grossissement à appliquer aux données d'image reçues ; ou une partie des données d'image reçues à afficher.

3. Procédé selon l'une quelconque des revendications précédentes, dans lequel l'étape consistant à déterminer une étape de traitement à appliquer aux données d'image entrées de façon à générer des données d'image adaptées, de telle sorte qu'au moins une caractéristique des données d'image adaptées soit optimisée pour ladite ou lesdites caractéristiques d'affichage, comprend une étape consistant à déterminer un paramètre de codage destiné à coder les données d'image d'entrée sur la base de la caractéristique d'affichage.

4. Procédé selon la revendication 3, dans lequel le paramètre de codage se rapporte à l'un au moins des éléments suivants : un niveau d'informations de couleur ; un niveau d'informations de lumière ; une valeur de résolution ; un rapport hauteur / largeur ; un débit de trame ; une complexité de compression de l'image adaptée ; et un débit binaire.

5. Procédé selon l'une quelconque des revendications précédentes, dans lequel l'événement de communication est un appel vidéo et, dans lequel les informations qui indiquent une caractéristique d'affichage sont mises à jour au cours de l'appel vidéo.

6. Procédé selon la revendication 3 ou la revendication 4, dans lequel les informations qui indiquent une caractéristique d'affichage sont émises avec les données vidéo de l'appel vidéo à partir du second terminal utilisateur vers le premier terminal utilisateur.

7. Procédé selon la revendication 4, dans lequel le paramètre de codage est mis à jour en réponse aux informations de réception qui indiquent la caractéristique d'affichage mise à jour.

8. Procédé selon la revendication 4, dans lequel le paramètre de codage est déterminé en fonction de la caractéristique d'affichage.

9. Procédé selon la revendication 4, dans lequel l'étape consistant à déterminer le paramètre de codage comprend les étapes consistant à :

   interroger une table de consultation avec la caractéristique d'affichage ; et
   rechercher le paramètre de codage avec lequel l'image entrée doit être codée.

10. Procédé selon l'une quelconque des revendications précédentes, dans lequel l'étape consistant à déterminer une étape de traitement à appliquer aux données d'image entrées de façon à générer des données d'image adaptées, de telle sorte qu'au moins une caractéristique des données d'image adaptées soit optimisée pour ladite ou lesdites caractéristiques d'affichage, permet d'obtenir un niveau de qualité perçue acceptable de l'image affichée.

11. Procédé selon la revendication 4, dans lequel l'étape consistant à appliquer l'étape de traitement de façon à générer les données d'image adaptées comprend une étape consistant à :

   coder les données d'image selon le paramètre de codage déterminé.

12. Procédé selon l'une quelconque des revendications précédentes, dans lequel les données d'image sont saisies par un appareil photographique.

13. Procédé selon l'une quelconque des revendications précédentes, dans lequel les données d'image sont des données de partage d'écran.

14. Terminal émetteur agencé de façon à émettre des données d'image vers un terminal récepteur au cours d'un événement de communication dans lequel les terminaux émetteur et récepteur s'envoient de l'un à l'autre des données de communication à délivrer en sortie à des utilisateurs au niveau de terminaux récepteur et émetteur respectifs, dans lequel le terminal récepteur comprend un affichage destiné à afficher des données d'image, ledit terminal émetteur comprenant :

   un récepteur destiné à recevoir des informations qui indiquent au moins une caractéristique d'affichage avec laquelle les données d'image reçues au niveau du terminal récepteur seront affichées sur ledit affichage au cours dudit événement de communication, dans lequel le récepteur est configuré de façon à recevoir une caractéristique d'affichage mise à jour au cours de l'événement de communication entre le terminal émetteur et le terminal récepteur ;
   un système d'entrée d'image destiné à entrer des données d'image au niveau du terminal émetteur ;
   un bloc de commande destiné à déterminer une étape de traitement à appliquer aux données d'image entrées de façon à générer des données d'image adaptées, de telle sorte qu'au moins une caractéristique des données d'image adaptées soit optimisée pour ladite ou lesdites caractéristiques d'affichage ;
   un bloc de traitement destiné à appliquer l'étape de traitement de façon à générer les données d'image adaptées ; et
   un émetteur destiné à émettre les données d'image adaptées vers le terminal récepteur.

15. Terminal émetteur selon la revendication 14, dans lequel le terminal émetteur est l'un : d'un noeud utilisateur final, d'un serveur qui relaie des données d'image en provenance d'un noeud utilisateur final, d'un serveur qui distribue des données d'image stockées au préalable.

16. Terminal récepteur destiné à recevoir des données d'image émises par un terminal émetteur au cours d'un événement de communication dans lequel les terminaux émetteur et récepteur s'envoient de l'un à l'autre des données de communication à délivrer en sortie à des utilisateurs au niveau des terminaux récepteur et émetteur respectifs, ledit terminal récepteur comprenant :

   un affichage destiné à afficher les données d'image reçues par le terminal récepteur, une unité de dispositif de signalisation d'affichage agencée de façon à déterminer des informations qui indiquent une caractéristique d'affichage avec laquelle les données d'image reçues au niveau du terminal récepteur seront affichées sur ledit affichage au cours dudit événement de communication, dans lequel le dispositif de signalisation d'affichage est configuré de façon à surveiller et à mettre à jour la caractéristique d'affichage au cours de l'événement de communication entre le terminal émetteur et le terminal récepteur ; et
   un émetteur destiné à émettre lesdites informations qui indiquent ladite caractéristique d'affichage vers le terminal émetteur, de telle sorte que le terminal émetteur puisse adapter les données d'image à émettre vers le terminal récepteur de façon à optimiser au moins une caractéristique de l'image pour ladite ou lesdites caractéristiques d'affichage.

17. Produit programme informatique comprenant des moyens de code de programme qui, quand ils sont exécutés par un ordinateur, mettent en oeuvre les étapes selon le procédé de l'une quelconque des revendications 1 à 13.

100

104

112

User A

User B

# FIG. 1

100

202

200

213    UI

203

201

104

201'

203'

UI    213'

200'

202'

112

# FIG. 2

FIG. 3

FIG. 4

S1 — Setup Video Call

S2 — Determine Display Information

S3 — Report Display Information To Transmitting Terminal

S4 — Determine Processing Step To Be Applied To Image Data

S5 — Apply Processing Step To Image Data

FIG. 5

FIG. 6

S11 — Setup Video Call

S12 — Determine Display Information

S13 — Report Display Information To First Terminal

S14 — Has Display Information Changes?

No

Yes

S15 — Report Updated Display Information

FIG. 7

```
┌─────────────────────────┐   S21
│     Receive Display      │  ∿
│      Information         │
└─────────────────────────┘
            │
            ▼
┌─────────────────────────┐   S22
│   Determine Required     │  ∿
│  Resolution Of Image     │
│    To Be Transmitted     │
└─────────────────────────┘
            │
            ▼
┌─────────────────────────┐   S23
│    Encode At Required    │  ∿
│       Resolution         │
└─────────────────────────┘
            │
            ▼
┌─────────────────────────┐   S24
│     Receive Updated      │  ∿
│   Display Information     │
└─────────────────────────┘
            │
            ▼        S25
          ╱────────────╲  ∿                      S26
        ╱      Has       ╲                         ∿
       ╱   Display Size    ╲    Yes    ┌─────────────────────────┐
       ╲    Increased?    ╱ ─────────► │   Increase Resolution    │
        ╲               ╱              │   At Which Image         │
          ╲────────────╱               │    Is Encoded           │
            │ No                       └─────────────────────────┘
            ▼
┌─────────────────────────┐   S27
│   Decrease Resolution At │  ∿
│  Which Image Is Encoded  │
└─────────────────────────┘
```

# FIG. 8

FIG. 9

FIG. 10

FIG. 11

**FIG. 12**

**FIG. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1463323 A